# EUROPÄISCHE PATENTSCHRIFT

(11) **EP 0 580 617 B1**
(45) Veröffentlichungstag und Bekanntmachung des Hinweises auf die Patenterteilung: **12.07.1995**
(21) Anmeldenummer: 92906988.8
(22) Anmeldetag: 19.03.1992
(51) Int. Cl.: H05K 11/02

(54) **RUNDFUNKEMPFÄNGER, INSBESONDERE FAHRZEUGEMPFÄNGER**
RADIO RECEIVER, ESPECIALLY VEHICLE RADIO
RECEPTEUR RADIO, EN PARTICULIER RECEPTEUR RADIO DE VEHICULE

(30) Priorität: 19.04.1991 DE 4112828
(43) Veröffentlichungstag der Anmeldung: 02.02.1994
(73) Patentinhaber: ROBERT BOSCH GMBH, 70442 Stuttgart (DE)
(72) Erfinder: SIEGLE, Gert, D-1000 Berlin 38 (DE); BRAEGAS, Peter, D-3200 Hildesheim (DE); KAESSER, Jürgen, D-3201 Diekholzen (DE); SUCHOWERSKYJ, Wadym, D-3200 Hildesheim (DE)
(86) Internationale Anmeldenummer: DE9200232
(87) Internationale Veröffentlichungsnummer: WO9219093

(56) Entgegenhaltungen:
- EP-A- 0 178 807
- WO-A-90/13206
- DE-A- 3 536 820
- US-A- 4 682 223

## Beschreibung

### Stand der Technik

Die Erfindung geht aus von einem Rundfunkempfänger nach der Gattung des Hauptanspruchs.

Aus dem Aufsatz von Peter Brägas "Leit- und Informationssysteme im Kraftfahrzeug - Ein Beitrag zur Verbesserung des Verkehrsablaufs und der Verkehrssicherheit", Zeitschrift "Internationales Verkehrswesen", Heft 5/85 ist ein Verfahren zur fahrtroutenselektiven Wiedergabe von digital kodierten Verkehrsnachrichten bekannt, wobei die Verkehrsnachricht selbst kodiert übertragen wird. Aufgrund der Codierung werden im Empfänger Standardtexte sowie Ortsnamen aufgerufen, aus denen die Verkehrsinformation zusammengesetzt wird. Der DE-OS 35 36 820 läßt sich ein Empfänger für Verkehrsmeldungen entnehmen, bei dem die Ortscodes und die Standardtexte in einem Festwertspeicher abgelegt sind. Dieser Festwertspeicher ist hierbei Bestandteil des Autoradios und entziffert die übertragenen Codes und setzt sie in eine verständliche Sprache um. Hierzu hat er Standardtexte sowie Ortscodes gespeichert.

Schließlich ist das Autoradio Blaupunkt Montreux RCR 30 bekannt. Dieses Autoradio weist einen Dekoder für digital übertragene Signale auf, die von einem Rundfunksender übertragen werden. Die digital übertragenen Signale werden dabei auf einer Anzeigeeinheit dargestellt. Weiterhin weist dieses Autoradio einen Schlitz auf, in den eine Chipkarte einführbar ist. Die Chipkarte enthält einen Sicherheitscode, und nur dann, wenn der Sicherheitskode auf der Chipkarte mit dem im Autoradio abgespeicherten Sicherheitscode übereinstimmt, ist eine Inbetriebnahme des Autoradios möglich. Die Chipkarte selbst enthält hierzu ein Widerstandsnetzwerk, dessen Wert von einem Rechner im Autoradio abgefragt wird.

### Vorteile der Erfindung

Der erfindungsgemäße Rundfunkempfänger bzw. die erfindungsgemäße Chipkarte mit den kennzeichnenden Merkmalen des Hauptanspruchs hat demgegenüber den Vorteil, daß der Datenspeicher leicht austauschbar ist. Dadurch wird erreicht, daß der Rundfunkempfänger auf besonders einfache Art und Weise an die sprachlichen Belange anzupassen ist. Weiterhin eröffnet sich dadurch die Möglichkeit, ohne das Öffnen des Rundfunkempfängers die neuesten Straßenverhältnisse bzw. Ortscodes zu berücksichtigen, da es während des Lebensdauer eines Rundfunkempfängers durchaus passieren kann, daß Ortsbezeichnungen geändert werden, die so auf einfache Art und Weise zu aktualisieren sind. Als weiterer Vorteil ist anzusehen, daß auch bei einer beschränkten Speicherkapazität das Rundfunkgerät weltweit einsetzbar ist. Durch die Auswahl geeigneter Chipkarten ist es nämlich möglich, den Rundfunkempfänger individuell an regionale Gegebenheiten anzupassen. Dadurch wird es möglich, einen einzigen Rundfunkempfänger herzustellen, der landesspezifische, individuelle Anpassungen nicht benötigt. Weiterhin wird dadurch erreicht, den Rundfunkempfänger so herzustellen, daß er den umfangreichen Speicher nicht benötigt.

Durch die in den Unteransprüchen aufgeführten Maßnahmen sind vorteilhafte Weiterbildungen und Verbesserungen des im Hauptanspruch angegebenen Rundfunkempfängers möglich.

Besonders vorteilhaft ist, auf der Chipkarte den Decoder und die Auswerteeinrichtung für die Verkehrsnachrichten anzuordnen. Durch diese Maßnahme wird erreicht, daß der Rundfunkempfänger weiter verbilligt wird. Die für die Auswertung der Verkehrsnachrichten erforderlichen Maßnahmen müssen nämlich nicht im Rundfunkempfänger vorgenommen werden, sondern werden von einem Decoder und einer Auswerteschaltung auf der Chipkarte wahrgenommen. Insbesondere die während der Einführungsphase zu erwartenden Weiterentwicklungen und Verbesserungen sind durch diese Maßnahme besonders einfach zu realisieren, da lediglich die Chipkarte ausgewechselt werden muß. Vorteilhaft ist es weiterhin, die Chipkarte über elektrische Kontakte mit dem Rundfunkempfänger zu verbinden. Durch diese Maßnahme wird erreicht, daß eine sichere Übertragung der digitalen Daten ermöglicht wird. Vorteilhaft ist auch, wenn die Chipkarte abziehbar ausgebildet ist. Einerseits wird dadurch ein schneller Austausch der Chipkarte ermöglicht, andererseits kann eine zusätzliche Sicherung des Rundfunkempfängers erreicht werden, wenn dieser nur in Verbindung mit einem Sicherheitscode auf der Chipkarte in Betrieb zu nehmen ist. Schließlich ist die Chipkarte von seinem Inhaber auch in Verbindung mit anderen Rundfunkempfängern einsetzbar, so daß nicht für jeden Rundfunkempfänger eine eigene Chipkarte erforderlich ist. Günstig ist weiterhin, die Chipkarte über den Rundfunkempfänger mit Spannung zu versorgen. Dadurch ist ein autarker Betrieb der Chipkarte möglich und es werden keine Spannungsquellen in der Chipkarte benötigt, was ihre Herstellung vereinfacht und verbilligt.

Die Chipkarte für einen solchen Rundfunkempfänger enthält in ihrer einfachsten Version einen Datenspeicher, mit Daten über den Sprachschatz und den Ortscode. In diesem Fall muß die Auswerteeinrichtung und der Dekoder im Rundfunkempfänger untergebracht sein. In einer weiteren Ausgestaltung der Chipkarte ist es vorteilhaft, den Dekoder und die Auswerteeinrichtung für die Verkehrsnachrichten mit auf der Chipkarte zu integrieren. In diesem Fall sind gegenüber einem üblichen Rundfunkempfänger keinerlei Änderungen erforderlich, abgesehen davon, daß die Anzeigevorrichtung und die akustische Ausgabe dafür vorbereitet sein muß, von der Chipkarte abgegebene Informationen zu empfangen. Zweckmäßigerweise ist die Chipkarte so ausgebildet, daß sie an ihrer Frontseite elektrische Kontakte aufweist. Dadurch wird eine besonders sichere Kontaktgabe der Chipkarte mit dem Rundfunkempfänger ermöglicht. Selbstverständlich sind kontaktlose Übertragungswege, beispielsweise induktiv mit Hochfrequenz, möglich. Vorteilhafterweise weist die Chipkarte auch einen Sicherheitskode auf, wobei eine Inbetriebnahme des Autoradios nur dann möglich ist, wenn der auf der Chipkarte abgespeicherte Code mit dem Code übereinstimmt, der im Rundfunkempfänger abgelegt ist.

### Zeichnung

Zwei Ausführungsbeispiele der Erfindung sind in der Zeichnung dargestellt und in der nachfolgenden Beschreibung näher erläutert. Es zeigen Figur 1 ein erstes Ausführungsbeispiel eines Rundfunkempfängers mit der dazugehörigen Chipkarte, Figur 2 den Aufbau des Datenspeichers in der Chipkarte und Figur 3 ein weiteres Ausführungsbeispiel eines Rundfunkempfängers, wobei jedoch die Chipkarte lediglich den Datenträger enthält.

### Beschreibung der Ausführungsbeispiele

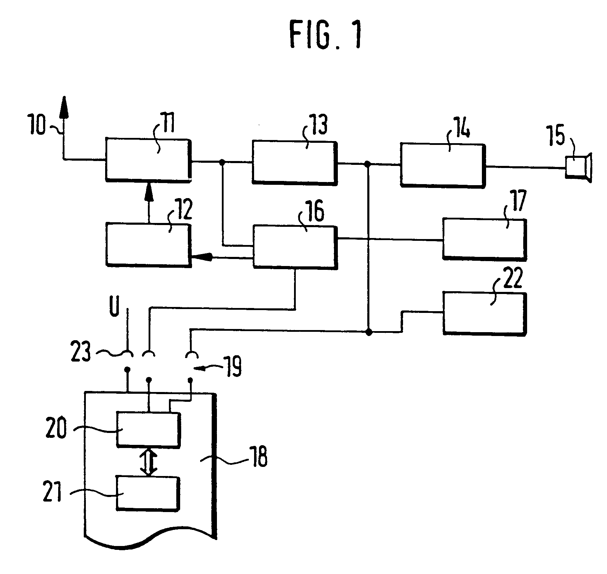

Die Figur 1 zeigt eine Antenne 10, deren Antennensignal dem Empfangsteil 11 eines Rundfunkempfängers zugeführt wird. Der Rundfunkempfänger ist hierbei insbesondere ein Fahrzeugempfänger, wie er in Kraftfahrzeuge eingebaut wird. Das Empfangsteil 11 wird hierbei von einem Abstimmsystem 12 gesteuert, das in der Lage ist, Rundfunksender einzustellen bzw. zu suchen. Das Abstimmsystem 12 wird hierbei von dem RDS-Dekoder 16 gesteuert, so daß es möglich ist, mit dem Abstimmsystem 12 den Tuner auf den besser zu empfangenden Sender einer Sendergruppe einzustellen bzw. eine geeignete Sendergruppe zu suchen. Das Ausgangssignal des Empfangsteils 11, das auch den Zwischenfrequenzverstärker bei einem Superhet umfaßt, wird einem Demodulator 13 zugeführt, das aus dem hochfrequenten Frequenzgemisch ein niederfrequentes Signal gewinnt. Dieses niederfrequente Signal wird einem Verstärker 14 zugeführt, an dessen Ausgang ein Lautsprecher 15 angeschlossen ist, so daß die empfangene Signale hörbar gemacht werden.

An das Empfangsteil 11 ist weiterhin der bereits erwähnte RDS-Decoder 16 angeschlossen. der RDS-Decoder 16 wertet die im empfangenen Frequenzgemisch enthaltenen digitalen Signale aus und stellt sie der Anzeige 17 zur Verfügung, soweit es sich um in Klartext übertragene Informationen, beispielsweise über den zu empfangenden Sender, handelt. Weiterhin stellt er diese digitalen Signale an Datenkontakten 19 zur Verfügung. Bei den Datenkontakten 19 ist des weiteren ein Kontakt 23 vorgesehen, der die Versorgungsspannung des Rundfunkempfängers führt. Die Datenkontakte 19 und der Versorgungsspannungskontakt 23 wirken mit einer Führung zusammen, in die eine Chipkarte 18 eingeschoben werden kann. Die Chipkarte 18 enthält an ihrer einen Frontseite entsprechende mit den Datenkontakten 19 und dem Versorgungsspannungskontakt 23 korrespondierende Anschlüsse, so daß die Kontakte 19 und 23 nach dem Einschieben mit den entsprechenden Kontakten der Chipkarte in Verbindung stehen. Die Chipkarte 18 enthält den Decoder und die Auswerteschaltung 20, die ihrerseits wiederum mit einem Datenspeicher 21 in Verbindung steht. Das Ergebnis der Auswertung wird über die Datenkontakte 19 dem Rundfunkempfänger zugeführt und auf der Anzeigeeinheit 22, die mit der Anzeige 18 identisch sein kann ausgelesen bzw. über einen Sprachsynthesizer dem Verstärker 14 zugeführt.

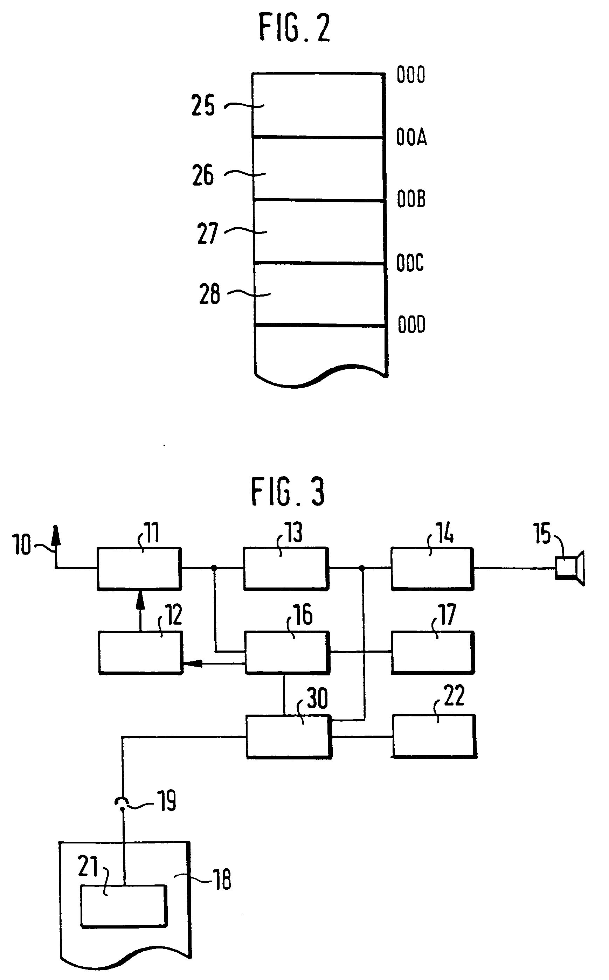

Der Datenspeicher 21 ist, wie in Figur 2 dargestellt, aufgebaut. Im Bereiche 000 bis 00A sind Programmdaten 25 eingegeben, die dazu dienen, den Decoder und die Auswerteeinrichtung 20 zu steuern. Im Bereich von 00A bis 00B ist der Sprachschatz 26 gespeichert, im Bereich von 00B bis 00C sind Ortscodes 27 gespeichert, während im Bereich 00C bis 00D Sicherheitscodes abgelegt sind.

Die Funktionsweise der Schaltungsanordnung gemäß Figur 1 soll nun näher erläutert werden. Während das übliche Rundfunksignal in bekannter Weise empfangen und verarbeitet wird, werden die digitalen Signale vom RDS-Decoder 16 ausgesiebt. Die im Klartext digital empfangenen Informationen, wie die empfangene Rundfunkstation, werden der Anzeigeeinheit 17 direkt zugeführt, und dort zur Information des Fahrers dargestellt. Die weiteren Informationen gelangen zum Dekoder und der Auswerteeinrichtung 20. Aufgrund der übertragenen Kodes werden nun vom Speicher 21 die entsprechenden Ortscodes aufgerufen. Ebenso werden aus dem Sprachschatz 26 Standardtexte aufgerufen und zusammen mit den Ortsinformationen zu einer Verkehrsinformation verknüpft. Werden beispielsweise aus dem Speicher 27 für den Ortscode die Orte Hamburg, Hannover, Soltau-Süd und Dorfmark aufgerufen, und aus dem Sprachspeicher die Information "A ... von ... nach ... zwischen ... und ... 3 km Stau", so wird daraus die Information "A7 von Hamburg nach Hannover zwischen Soltau-Süd und Dorfmark 3 km Stau" zusammengesetzt. Diese Information wird nun über die Datenleitungen und den Kontakt 19 zur Anzeige 18 bzw., wenn ein Sprachsynthesizer vorgesehen ist, auch in Sprache dem Verstärker 14 zugeführt. Es sei darauf hingewiesen, daß es sich bei der Anzeigeeinheit 22 nicht um eine eigenständige Anzeige handeln muß, sondern daß diese Anzeigeeinheit mit der Anzeigeeinheit 17 verknüpft sein kann. Der Zusammenbau der Nachrichten geschieht aufgrund der Programminformationen 25, die im Speicherbereich 000 bis 00A abgelegt sind. Wie die Kodierung im einzelnen vorgenommen werden kann, ist detaillierter in der DE-OS 35 36 820 beschrieben.

Je nach befahrenem Gebiet und je nach gewünschter Sprache sind unterschiedliche Chipkarten möglich. Während in einem Fall beispielsweise der Sprachschatz 26 vorformulierte Standardtexte in deutsch enthält, können in dem Speicherbereich für den Ortscode beispielsweise die Ortscodes von Deutschland oder aber die Ortscodes von Frankreich oder die Ortscodes von Spanien oder die Ortscodes eines Bundesstaates der Vereinigten Staaten von Amerika gespeichert sein. Durch die Verwendung mehrerer Chipkarten ist es daher möglich, für unterschiedliche Länder Ortscodes dem Rundfunkempfänger zur Verfügung zu stellen, so daß auch dann eine Information des Autofahrers möglich ist, wenn der Rundfunkempfänger in ein anderes Land gebracht wird, beispielsweise wenn der Autofahrer während einer Urlaubsfahrt Verkehrsinformationen hören möchte. Der im Speicher 26 abgelegte Sprachschatz ist der Sprache des Hörers anpaßbar. Für englisch sprechende Radiohörer sind hier die Standardtexte in Englisch abgelegt, für französisch sprechende Hörer in Französisch usw. Bei dem zuvor erwähnten Ausführungsbeispiel wird dann in Englisch übertragen: "A7 from Hamburg to Hannover between Soltau-Süd and Dorfmark 2 miles congestion". Auch fremdsprachlichen Hörern kann daher in ihrer Muttersprache die Verkehrsinformation angezeigt oder über den Sprachsynthesizer zur Verfügung gestellt werden. Sprachsynthesizer sind hierbei bereits käuflich erwerbbare elektronische Bauelemente, die aufgrund von digitalen Daten Worte generieren und diese als niederfrequentes Signal zur Verfügung stellen.

Die Figur 3 zeigt ein weiteres Ausführungsbeispiel der Erfindung, wobei gleiche Bausteine mit gleichen Ziffern bezeichnet sind. Dieser Rundfunkempfänger unterscheidet sich von dem in Figur 1 dargestellten Rundfunkempfänger dadurch, daß die Decoder- und Auswerteschaltung 30 Bestandteil des Rundfunkempfängers ist. Vom RDS-Decoder werden die digitalen Daten dem Decoder der Auswerteschaltung 30 zugeführt. Die Auswerteschaltung 30 gibt die von ihr abgegebenen Informationen der Anzeigeeinheit 22 bzw. die vom Sprachsynthesizer aufbereiteten Worte dem Verstärker 14 weiter. Der Decoder 30 holt nun die für ihn erforderlichen Daten von der Chipkarte 18, die lediglich den Datenspeicher 21 enthält, wobei der Speicher ähnlich wie in Figur 2 dargestellt, aufgebaut sein kann. Für die Erfindung wesentlich ist jedoch, daß er zumindest den Sprachschatz im Speicher 26 und den Ortscode im Speicher 27 enthält. Über die Kontakte 19 werden nun die Adressen des Speichers angesprochen und die entsprechenden Daten in den Decoder 30 übertragen. Hierbei ist unter Umständen eine größere Anzahl von Kontakten erforderlich, so daß eine entsprechende Adressierung und ein Auslesen der Daten möglich ist. Durch die Adressierung der Chipkarte werden nunmehr spezifische Ortscodes bzw. sprachspezifische Standardtexte aufgerufen, die von dem Decoder und der Auswerteeinrichtung 30 verarbeitet werden. Bei diesem Ausführungsbeispiel sind die Aufgaben des Decoders bzw. der Auswerteschaltung in den Empfänger verlegt, so daß sich dadurch zwar die Herstellung des Empfängers geringfügig verteuert, jedoch dafür die Chipkarte 18 einfacher ausgestaltet werden kann.

Günstig ist es auch, wenn sowohl bei der Ausgestaltung gemäß Figur 1 als auch bei der Ausgestaltung gemäß Figur 3 die Chipkarte zusätzlich einen Sicherheitscode 28 enthält. In diesem Fall ist die Chipkarte in bekannter Weise auch dazu geeignet, eine Diebstahlsicherung des Rundfunkempfängers zu gewährleisten, da nur der Besitzer der Chipkarte berechtigt und in der Lage ist, den Rundfunkempfänger in Betrieb zu nehmen.

## Patentansprüche

1. Rundfunkempfänger, insbesondere Fahrzeugempfänger, mit einem Empfangsteil (11) einem Demodulator (13) und einem Verstärker (14) mit einem Decoder (16) zur Decodierung von dem Rundfunksignal aufmodulierten digitalen Signalen, mit Mitteln zur Anzeige und/oder akustischen Ausgabe von in den digitalen Signalen enthaltenen Verkehrsnachrichten und mit einem Datenspeicher (21), in dem als Daten Standardsätze und Ortsnamen gespeichert sind und mit einer Auswerteeinheit, die daraus eine Verkehrsinformation zusammensetzt, dadurch gekennzeichnet, daß in dem Rundfunkempfänger eine Chipkarte (18) eingeschoben ist, und daß die Chipkarte (18) den Datenspeicher (21) enthält.

2. Rundfunkempfänger nach Anspruch 1, dadurch gekennzeichnet, daß die Chipkarte (18) den Decoder und die Auswerteeinrichtung (20) für die Verkehrsnachrichten enthält.

3. Rundfunkempfänger nach einem der Ansprüche 1 oder 2, dadurch gekennzeichnet, daß die Chipkarte (18) über elektrische Kontakte mit dem Rundfunkempfänger verbunden ist.

4. Rundfunkempfänger nach einem der vorhergehenden Ansprüche, dadurch gekennzeichnet, daß die Chipkarte (18) abziehbar ist.

5. Rundfunkempfänger nach einem der vorhergehenden Ansprüche, dadurch gekennzeichnet, daß der Chipkarte (18) vom Rundfunkempfänger, vorzugsweise über einen der Kontakte (23), eine Spannung zuführbar ist.

6. Rundfunkempfänger nach einem der Ansprüche 3 oder 5, dadurch gekennzeichnet, daß die Chipkarte (18) an ihrer Frontseite elektrische Kontakte (19) aufweist.

7. Rundfunkempfänger nach einem der vorhergehenden Ansprüche, dadurch gekennzeichnet, daß die Chipkarte (18) einen Sicherheitscode (28) gespeichert hat.

## Claims

1. Radio receiver, especially vehicle receiver, having a receiving section (11), a demodulator (13) and an amplifier (14) with a decoder (16) for decoding digital signals modulated onto the radio signal, having means for displaying and/or acoustically reproducing traffic information contained in the digital signals and having a data store (21), in which standard records and place names are stored as data, and having an evaluation unit, which compiles traffic information from the said data, characterized in that a chip card (18) is slid into the radio receiver, and in that the chip card (18) contains the data store (21).

2. Radio receiver according to Claim 1, characterized in that the chip card (18) contains the decoder and the evaluation device (20) for the traffic information.

3. Radio receiver according to one of Claims 1 and 2, characterized in that the chip card (18) is connected via electrical contacts to the radio receiver.

4. Radio receiver according to one of the preceding claims, characterized in that the chip card (18) is retractable.

5. Radio receiver according to one of the preceding claims, characterized in that the chip card (18) can be supplied with a voltage from the radio receiver, preferably via one of the contacts (23).

6. Radio receiver according to one of Claims 3 and 5, characterized in that the chip card (18) has electrical contacts (19) on its front side.

7. Radio receiver according to one of the preceding claims, characterized in that the chip card (18) has a security code (28) stored in it.

## Revendications

1. Récepteur radio, en particulier récepteur de véhicule, avec une partie réceptrice (11), un démodulateur (13) et un amplificateur (14), avec un décodeur (16) pour décoder des signaux numériques modulés par le signal radio, avec des moyens pour afficher et/ou délivrer de façon acoustique les informations sur le trafic routier contenues dans les signaux numériques et avec une mémoire de données (21) dans laquelle on met comme données des phrases standard et des noms de lieux et avec une unité d'exploitation, qui compose à partir de là une information sur le trafic routier, récepteur radio caractérisé en ce que l'on enfonce dans le récepteur radio une carte à puce (18) et en ce que la carte à puce (18) contient la mémoire de données (21).

2. Récepteur radio selon la revendication 1, caractérisé en ce que la carte à puce (18) contient le décodeur et le dispositif d'exploitation (20) pour les informations sur le trafic routier.

3. Récepteur radio selon l'une des revendications 1 ou 2, caractérisé en ce que la carte à puce (18) est reliée par des contacts électriques avec le récepteur radio.

4. Récepteur radio selon l'une des revendications précédentes, caractérisé en ce que l'on peut retirer la carte à puce (18).

5. Récepteur radio selon l'une des revendications précédentes, caractérisé en ce que l'on peut appliquer une tension à la carte à puce (18) par le récepteur radio, de préférence par l'intermédiaire de l'un des contacts (23).

6. Récepteur radio selon l'une des revendications 3 ou 5, caractérisé en ce que la carte à puce (18) présente sur sa face frontale des contacts électriques (19).

7. Récepteur radio selon l'une des revendications précédentes, caractérisé en ce que la carte à puce (18) à mise en mémoire un code de sécurité (28).
